# EUROPEAN PATENT APPLICATION

(11) **EP 2 840 536 A1**
(43) Date of publication of application: **25.02.2015**
(21) Application number: 13004102.3
(22) Date of filing: 19.08.2013
(51) Int. Cl.: G06Q 10/08, G06Q 50/28, G06Q 50/30, G06Q 90/00

(54) **A system, a method and a computer program product for determining required cargo heating of a vessel**

(71) Applicant: Marine Systems and Solutions S.A., Panama City (PA)
(72) Inventor: Ivanov, Dmitrii, 190000 Saint-Petersburg (RU)
(74) Representative: Gizinska-Schohe, Malgorzata

(57) **Abstract**

The invention relates to method for determining required cargo (61) heating in a vessel for maintaining temperature of the cargo in a prescribed range, the method comprising the steps of: accessing data on ambient conditions; accessing data on a current temperature of the cargo (62) and temperature constrains; calculating (65) future temperature of the cargo using a thermodynamic model (64) of a vessel based on the accessed data on ambient conditions, the current temperature of the cargo and an initial cargo heating plan. The invention further relates to a computer program product, a carrier comprising a computer program product, a system for enabling vessel cargo heating and a vessel.

## Description

### FIELD OF THE INVENTION

The invention relates to a method for determining required cargo heating of a vessel for maintaining temperature of the cargo in a prescribed range.

The invention further relates to computer program product.

The invention still further relates to a carrier comprising a computer program product.

The invention still further relates to a system for enabling cargo heating of the vessel.

The invention still further relates to a vessel, such as a tanker.

### BACKGROUND OF THE INVENTION

In the present practice of marine operations fuel saving progressively gains importance. In particular, for tankers, the bunker pricing strongly depends upon the fuel consumption during the voyage. Due to the fact that the fuel costs increase steadily, fuel saving measures may not be neglected. At the same time, from environmental perspective, ecological requirements and regulations become more demanding causing the marine operators to prescribe usage of the expensive low sulfur fuel in some areas of the world. This enhances the demand for a cost-effective management of fuel consumption.

Next to these, IMO resolution MEPC.213(63) - Guidance for the development of a ship energy efficiency plan (SEEMP) is currently in force. Compliance with the regulations set forth in the Guidance will put even more emphasis on the necessity to operate a vessel in a more fuel efficient way.

It will be appreciated that cargo heating, in particular in tankers, is a process which incurs substantial fuel losses. In some instances, fuel consumption for heating of crude oil and similar products is comparable with the fuel consumption for propulsion.

It is a problem of the current practice that the process of cargo heating is poorly managed. In some instances a dedicated group of experts is assigned for following an individual ship and to provide manual analysis and update of the heating plan in order to enable heating of the cargo towards a prescribed discharge temperature at a given date. Such group of experts usually comprises a shore office which communicates to a vessel authority when the cargo has to be heated for maintaining the cargo within the prescribed range of temperatures. It will be appreciated that the group of experts is using static model for calculating the prospect target temperature based on the current measured temperature and the number of days left before discharging the cargo.

In this way of operation, the vessel authority has no access into expected dynamics of the proposed heating plan, wherein the fuel consumption is not managed at all. More in particular circumstances, for example, when the vessel does not reach its destination in accordance with a pre-planned voyage scheme, it may be difficult in the present practice it may be difficult to guarantee the target temperature of the cargo. It will be appreciated that for some specific cargo types, such as crude oil, heavy fuel oil (HFO) an accurate discharge temperature is demanded. Should the tanker offer such cargo at a deviated temperature, it will not be accepted, which may cause substantial losses to the vessel operator.

### SUMMARY OF THE INVENTION

It is an object of the invention to provide a reliable and an efficient method for determining and enabling cargo heating in order to maintain temperature of the cargo in a prescribed range. It is a further object of the invention to provide a method of determining and enabling cargo heating which can be fast, interactive and may be capable of investigating different scenario's substantially instantly. It is a still further object of the invention to provide the method for determining and enabling cargo heating, wherein fuel losses are minimized.

To this end, the method for determining required cargo heating in a vessel, according to an aspect of the invention, comprises the steps of:
- accessing data on ambient conditions;
- accessing data on a current temperature of the cargo and the temperature constrains;
- calculating future temperature of the cargo using a thermodynamic model of a vessel based on the accessed data on ambient conditions, the current temperature of the cargo, a forecast of the ambient conditions and an initial cargo heating plan.

The technical measure of the invention is based on the insight that using an accurate thermodynamic model of the vessel and a suitable forecast of the ambient (weather) conditions, it is possible to adequately calculate any future cargo temperature dynamically for a given heating plan. It will be appreciated that the thermodynamic model is based on the actual ship drawings, comprising actual dimensions of the tank, the ballast tank and any other volume and material present in the construction, which may substantially influence temperature dissipation from the heated cargo into the surroundings. The thermodynamic model further comprises data on physical properties of the materials of the vessel and the cargo. When necessary, these properties are provided as a function of temperature, pressure, etc.

Accordingly, the invention provides an accurate and flexible tool which is capable of calculating the (graphs for) the cargo temperature prospectively, taking due regard of the continuously changing conditions. This has an advantage that the vessel authority is capable of advance planning of the voyage and gain better insights into the dynamics of fuel consumption for enabling cargo heating. It is a further advantage of the method according to the invention that a fast and reliable iteration is allowed, enabling the vessel authority to optimize the initial heating plan.

It will be appreciated that the initial heating plan may comprise different options. First, the initial heating plan may be passive (no heating) in order to forecast or simulate mere heat dissipation from the cargo into the surroundings. Such passive heating plan may be useful for the first few days of the voyage when the cargo is allowed to cool down within the prescribed allowable range of temperatures.

Secondly, the heating plan may be a constant heating plan. In this plan the temperature of the cargo may be maintained at the starting temperature during the whole voyage. It will be appreciated that such plan may be not efficient in terms of fuel consumption.

Third, the heating plan may be a mixture between a suitable number of phases of no heating and a suitable number of phases wherein the cargo is heated. It will be appreciated that the cargo may be heated using steam generators (boilers).

It will be further appreciated that the initial heating plan itself may be subject to an optimization equation in an automatic way (by means of a suitable computer algorithm) which may be used for managing cargo heating. For example, an optimization function may be defined targeting the minimum fuel consumption for maintaining the cargo within the prescribed rage of temperatures and for delivering the cargo at a given date with the prescribed discharge temperature. Additionally, or alternatively, the optimization algorithm may be provided for minimizing the fuel costs, paying due attention to the fact that expensive low sulfur fuel has to be used for the last few days of the voyage in some regions of the world.

It will be further appreciated that the method according to the invention may comprise a calculation algorithm for iteratively optimizing the initial heating plan and the duration of its active and passive phases in terms of the output future temperature and fuel consumption.

In an embodiment of the method according to the invention, the heating plan comprises data on energy supply to the cargo.

It will be appreciated that the most challenging objective is to manage the cargo heating dynamically, i.e. when the ambient conditions are being varied. The ambient conditions usually comprise data on the air temperature, (sea) water temperature, wind and (sea) state.

Let us consider the following conditions:
- air temperature +5 degrees Celsius,
- sea water temperature +3 degrees Celsius,
- wind: 2 - 3 knots,
- sea state: 2 - 3 point
- initial temperature of the cargo +60 degrees Celsius
- instruction for maintaining cargo: allowed temperature range (40-60) degrees, temperature at discharge +60 degrees Celsius.

It is found that for heating the cargo (full tanker) from 40 to 60 C within 96 hours will require 1588 MWT of heat energy for the constant ambient conditions. In the other words, the cargo heating according to this scheme will require steam boilers to run with a steam capacity of 27 t/h to produce steam of 150C at 7-8 bars pressure.

Modern marine steam boilers consume 1 kilo of fuel to produce 13 kilogram of steam. Accordingly, the above heating scheme will cost about 50 tons of fuel /day which is about the amount of fuel which is necessary for propulsion.

Therefore, by optimizing the heating plan substantial fuel economy may be achieved.

In an embodiment of the method according to the invention the forecast data is being dynamically updated.

It is found that in order to sharpen the fuel optimization scheme for minimizing fuel consumption it is advantageous to extend the calculus for forecasting the necessary heat supply to the cargo with higher accuracy. It will be appreciated that when the weather suddenly worsens on becomes milder, different adaptive measures for managing heating may be required.

In a still further embodiment of the method according to the invention, the thermodynamic model of the vessel or a dedicated algorithm associated with the thermodynamic model is arranged to calculate an optimal heating plan of the cargo for a pre-determined target future temperature of the cargo.

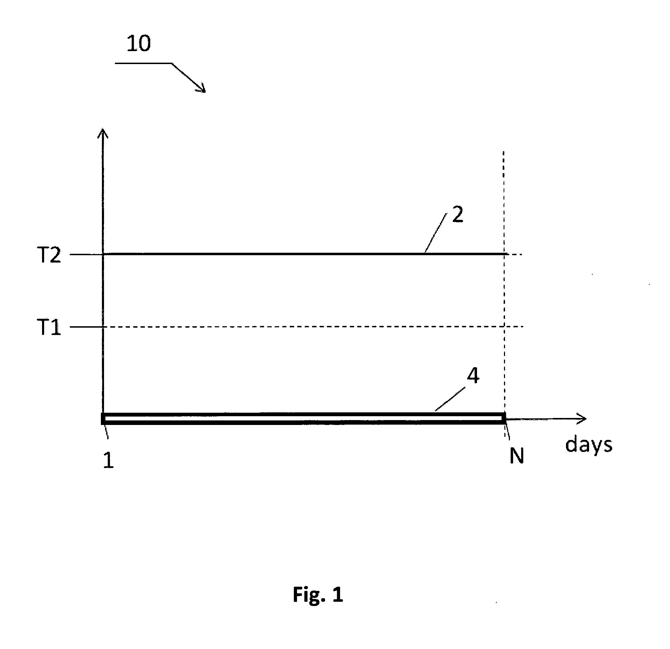

It will be appreciated that the thermodynamic model may be adapted to calculate the temperature curve of the cargo, wherein the actual heating plan for the boilers may be easily deduced from that based on experience. Figures 1 - 3 present exemplary embodiments of different heating plans calculated using the thermodynamic model of the vessel.

It will be appreciated that the method according to the invention to determine the future cargo temperature and/or the optimal heating plan for reaching such temperature is arranged to operate fully automatic, so that the operator (vessel authority) may easily alter input data on actual cargo temperature as well as the weather forecast to investigate the expected behavior of the cargo temperature. Preferably, the optimal heating plan is provided by the method according to the invention based on minimum energy consumption for reaching the pre-determined target future temperature of the cargo. Alternatively or additionally the optimal heating plan may be optimized based on the cheapest scenario.

It will be further appreciated that the method according to the invention is suitable to be implemented as a training station for training suitable vessel personnel. In this way the personnel may carry out the method as is set forth in claim 1 on a suitable computer using the computer program product as is set forth in the appended claims. By having access to such simulator of the cargo temperature management system, the vessel personnel can be duly trained prior to the voyage. This may further improve the professionalism of the personnel in terms of cargo/fuel management during an actual voyage.

It will be further appreciated that the thermodynamic model of the vessel may further comprise tabulated data and/or empirical data and/or mathematical model.

This technical measure is based on the insight that it may be not sufficient to construct the thermodynamic model solely based on the constructive characteristics of the vessel. Although usually for a new ship the thermodynamic model shall largely be based on the technical drawings and material properties of the vessel. In addition, such model may be appended with empirical data on successful heating plans in different weather and voyage conditions. More in particular, the empirical data may comprise stored phases of heating plans for specific vessels per cargo temperatures/weather conditions.

In a still further embodiment of the method according to a still further aspect of the invention, the step of calculating future temperature of the cargo using a thermodynamic model of a vessel based on the accessed data on ambient conditions and the current temperature of the cargo is interactive with a user.

It is found to be particularly advantageous to provide a possibility for user interaction. It will be appreciated that in this context the user may be embodied by the vessel operator or a vessel authority present on the vessel. Accordingly, be means of user interaction a great number of possibilities emerge. For example, the user may be interested in investigating the cargo temperature behavior per heating phase. For example, the user may indicate the time periods when the cargo is heated and may in real time see the result of the cargo temperature.

Alternatively, the user may be interested in inspecting the outcome cargo temperature when he alters the ambient conditions. More in particular, the user may be interested in investigating the outcome of the cargo temperature when the voyage plan is altered, for example, when the voyage is prolonged or is shortened.

The method according to any one of the preceding claims, wherein the said thermodynamic model is self-learning. Accordingly, the thermodynamic model may suitably incorporate any successful heating plan during implementation of a current plan. Those skilled in the art would readily appreciate how this functionality may be implemented using logistic or mathematical means.

In a still further embodiment of the method according to a still further aspect of the invention, the thermodynamic model of the vessel is constructed based on the actual data on the construction of the vessel and is arranged for calculating the heat dissipation from the cargo to surroundings.

It is found to be advantageous to mathematically simulate or describe the heat dissipation model of the cargo. By doing so, the cargo heating as a whole may be better modeled, especially in combination with (point-like) heating systems. The cargo heat dissipation into the surroundings is mainly determined by the material properties of the cargo and of the vessel and may be accurately modeled.

In a still further aspect of the invention the method further comprises the step of calculating the future temperature of the cargo for a pre-defined input energy.

This step may be advantageous during the initial exploitation of the method on a particular vessel, as by calculating the cargo temperature based on the direct input of energy (local heating) data is provided to the system for forming a learning curve. In alternative set-up, the vessel authority may be interested in solving the direct problem of seeing the dependence of the cargo temperature on the input energy (steam/fuel).

Preferably, the pre-defined input energy is tabulated or is input by an operator. For example, the operator may have designed the heating phases based on his previous experience (on other vessels). By using this mode, the operator may perform quality check of the method, for example, prior to using it during an actual voyage.

It will be further appreciated that the method according to the invention, especially when implemented as a computer program, may be perfectly used as a training tool for vessel operator. Such tool may be installed on a vessel, or ashore, in teaching establishment.

In a still further embodiment of the method according to the invention, the method further comprises the step of generating an alert upon a condition when the actual or a future temperature of the cargo meets a pre-defined critical value.

It is found to be particularly advantageous to provide safe-guarding features of the method of the invention, especially when operating in a fully automated way. By generating an alert, the system is capable of timely warning the vessel authority should the cargo temperature approach a specific pre-defined level. Those skilled in the art would readily appreciate which action levels may be pre-defined to be used as an alert level.

The computer program product according to the invention comprises instructions for causing a processor to carry out the steps of the method as is set forth in the foregoing.

It will be appreciated that the computer program may be advantageously installed on the vessel. In this way the personnel may readily address the heating planning system on demand, without any delay. It will be appreciated that nowadays vessel support services exist, which provide some assistance in managing vessel heating. However, these services are very expensive, as a dedicated team of experts is assigned per ship voyage and they follow the developments of the cargo temperature tightly. In addition, the current practice has a disadvantage that the experts calculate the cargo temperature in static conditions based on actual parameters (cargo temperature, ambient conditions, sea/water state, etc). Therefore should these parameters be subject to a substantial change, the future temperature calculated for static conditions shall be not correct.

The method and the computer program according to the invention solve this technical problem by providing accurate and flexible means for taking account of dynamics in parameters influencing the future temperature of the cargo. In addition, use of the installed software product may be more cost-efficient in the long run, as recalculating and re-optimizing the heating plan does not need extensive work of a team of experts.

The carrier according to the invention comprises a computer program product as is set forth in the foregoing.

It will be appreciated that the carrier may comprise an executable code of the software program which is drafted in accordance with the method as is set forth in the foregoing. The carrier may be a CD-ROM or any other suitable data storage device capable of storing the computer program product.

The vessel according to the invention, such as a tanker, comprises the computer program product as is set forth in the foregoing.

The system for enabling cargo heating of the vessel, according to the invention, comprises
- a processor adapted to collect data on the ambient conditions and the current temperature of the cargo and the temperature constrains,
- a computer program product comprising instructions for causing a processor to carry out the method comprising the steps of:
- accessing data on ambient conditions;
- accessing data on a current temperature of the cargo;
- calculating future temperature of the cargo using a thermodynamic model of a vessel based on the accessed data on ambient conditions, the current temperature of the cargo and an initial cargo heating plan;
   wherein the processor is being further arranged to calculate the future temperature of the cargo in response the computer program being activated,
- a heating system controllable by the processor for implementing the heating plan.

It is found particularly advantageous to incorporate the computer program product for optimizing the heating plan into the vessel architecture. In this way an efficient and a robust cargo temperature control and management system may be provided.

These and other aspects of the invention will be further discussed with reference to drawings wherein like reference numerals represent like elements. It will be appreciated that the drawings are provided for illustrative purposes and may not be used for limiting the scope of the appended claims.

### BRIEF DESCRIPTION OF THE DRAWINGS

Figure 1 presents in a schematic way an exemplary embodiment of a first heating plan.
Figure 2 presents in a schematic way an exemplary embodiment of a second heating plan.
Figure 3 presents in a schematic way an exemplary embodiment of a third heating plan.
Figure 4 presents in a schematic way an embodiment of input data for defining a thermodynamic model of a vessel.
Figure 5 presents in a schematic way an embodiment of an optimal heating plan.
Figure 6 presents in a schematic way an embodiment of a vessel provided with a cargo heating management system according to an aspect of the invention.

### DETAILED DESCRIPTION OF THE DRAWINGS

Figure 1 presents in a schematic way an exemplary embodiment of a first heating plan 10. The present schematic embodiment illustrating the method according to an aspect of the invention comprises a calculation and prognosis of the cargo temperature 2 in a tanker based on the data on the initial cargo temperature on day 1, data on the ambient conditions and a constant mode of cargo heating 4.

In order to enable quantitative analysis of the efficacy of the present embodiment a tanker having a pre-determined volume is being assumed and having the following operational characteristics - temperature of the cargo at departure is T2 (about 60 degrees Celsius for oil), target future temperature at day N for discharge is T2. Fuel type is known (either conventional fuel or the low sulfur fuel).

When the amount of energy necessary for maintaining the cargo at the loading temperature for the whole voyage is determined, it will be seen that this mode of operation is the most expensive.

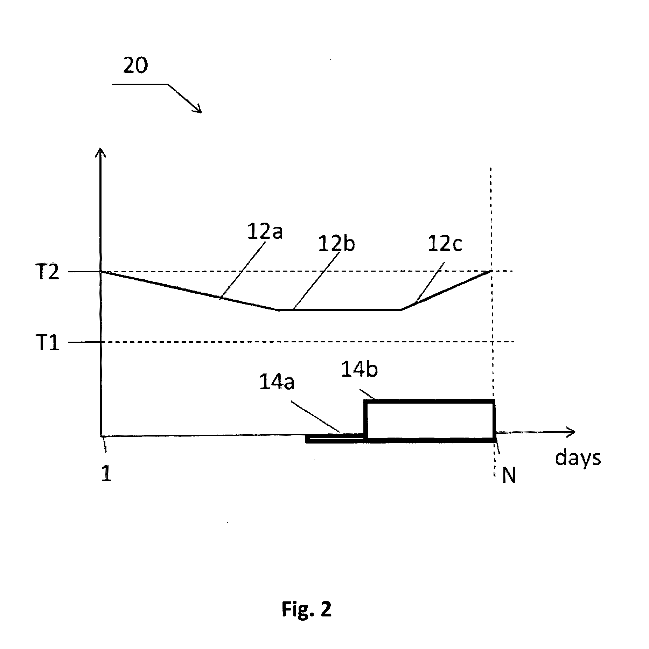

In accordance with an aspect of the invention, the method is capable of altering the heating plan for minimizing fuel consumption and, therefore, overall costs of the voyage. Accordingly a heating strategy presented in Figure 2 may be provided.

Figure 2 presents in a schematic way an exemplary embodiment of a second heating plan 20. In this heating plan the temperature of the cargo is allowed to decrease during several days. It will be appreciated that the temperature of the cargo shall be constantly gauged using suitable detectors and in practice it will not be allowed that the cargo temperature drops below a pre-determined level T1. Should it occur that the cargo temperature approaches the critical level T1, an alarm may be generated to warn the vessel personnel about a possible cargo undercooling.

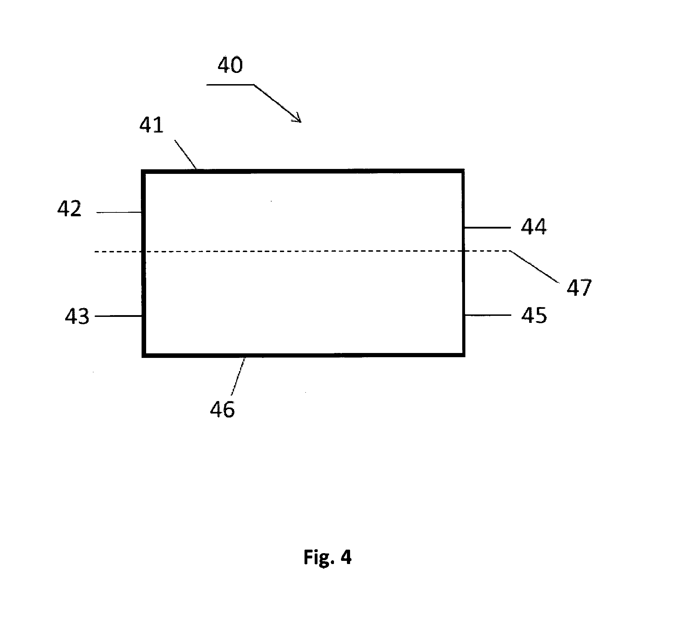

In the present plan, the method according to the invention, based, for example, on the empirical data, may decide to start heating the cargo at a specific time (see heating block 14a) causing the temperature of the cargo to stabilize according to a T-curve segment 12b. Afterwards, the boilers may be activated to a higher level, causing the temperature of the cargo to grow in accordance with the curve 12c. It will be appreciated that the amount of energy supplied into the cargo compartment (see block 14b) is dependent on the actual thermodynamic processes taking place in the tanker. It is found that provided that the method according to the invention uses an adequate thermodynamic model of the vessel, there will be a reliable correspondence between the calculated cargo temperature, heating energy supplied into the cargo and the target cargo temperature at discharge (day N). Figure 4 shall present the general insights which can be used for defining an adequate and robust thermodynamic model of the vessel.

Accordingly, when the total energy necessary for heating the cargo is calculated for plan 2 it is found that this plan is more cost efficient than the plan discussed with reference to Figure 1.

However, it will be appreciated that a very expensive low sulfur fuel has to be used close to the day N on which the cargo is to be discharged. Usually, the low sulfur fuel has to be used for last 2-3 days of the voyage in regions where specific local requirements are in force.

Accordingly, in the temperature curve of the heating plan 20 it is seen that the cargo is being intensively heated during the last days of the voyage. This may be less cost-efficient, should the expensive low sulfur fuel be used.

Preferably, the method of the invention is used to optimize not only the absolute amount of fuel to be used, but also the costs of the fuel. Accordingly, it may be advantageous to avoid extensive cargo heating as in plan 2 (see segment 12c) for the last days of the voyage.

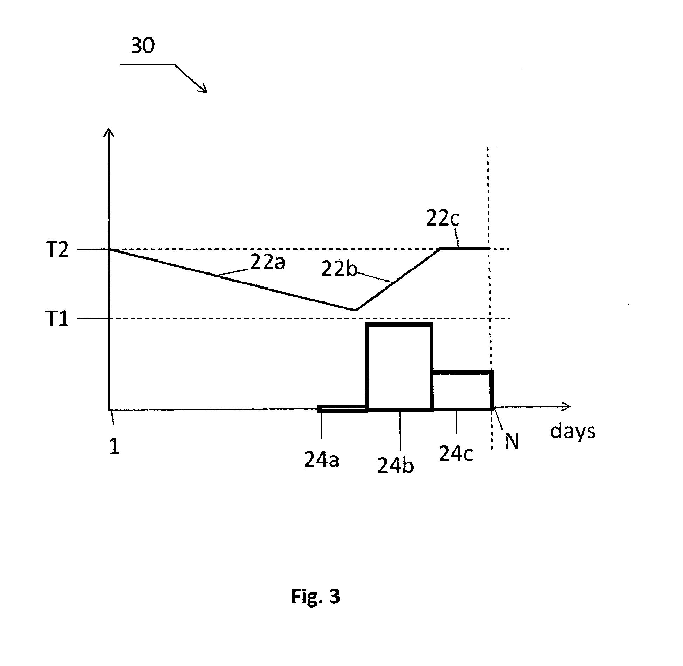

Figure 3 presents in a schematic way an exemplary embodiment of a third heating plan. In the present heating plan 30 the cargo temperature is allowed to drop from the initial value T2 towards an intermediate value between the target value T2 and a lowest allowable value T1.

Depending on the intermediate cargo temperature (segments 22a, 22b) and the ambient conditions together with the forecasted ambient conditions, the method calculated an optimum date when the cargo is being extensively heated up to the prescribed target temperature (see end portion of segment 22b). Accordingly, the target temperature is reached a few days before the discharge, wherein during the few days before the discharge the cargo temperature is maintained (segment 22c) at the target temperature.

It is found that this mode of drawing the heating plan using the method of the invention may be the most cost-effective, because not only the volume of fuel is minimized, but the overall costs per used fuel type are minimized as well.

Figure 4 presents in a schematic way an embodiment of input data for defining a thermodynamic model of a vessel. In this particular embodiment a real vessel is being modeled thermodynamically based on the real data of the vessel. For example, the vessel may be a tanker having a cargo compartment 40. The cargo tank may be simulated by a rectangular box, having a surface 41 contacting, for example, with ambient air. It will be appreciated that in reality the cargo tank may have a complicated shape having oblique surfaces. The thermodynamic model takes due account of the real tank configuration. In the present figure the tank is approximated by a rectangular box only for the reasons of simplicity. The surface 42 may be a front surface which is situated above the level of water, schematically given by 47. The surface 43 may be a surface of the tank which is located below the water level. The surface 46 may represent the bottom surface. The surfaces 44 and 45 may represent the further surfaces of the cargo tank, which may be in contact with air/water or, alternatively, they may be in contact with other (inner) surfaces of the tanker. It will be appreciated that the cargo tank may be in contact with the ballast tank. The thermodynamic model should preferably take due account of this as well, based on the ship drawings.

In accordance with the construction of the bunker a series of equations may be drafted for describing heat dissipation from the inner volume of the cargo tank 40. These equations are used to form the thermodynamic model of the tank which is used in the method according to the invention.

Accordingly, when the initial heating plan is being optimized in view of the dynamically changing ambient conditions, the thermodynamic model of the tank is used for calculating the amount of heat energy which is necessary to heat the cargo from the current temperature to the future target temperature. As is explained earlier the method according to the invention may be used for minimizing the total volume of the fuel used for cargo heating, or, alternatively, the method may be used for minimizing the total costs of the fuel which is used for cargo heating.

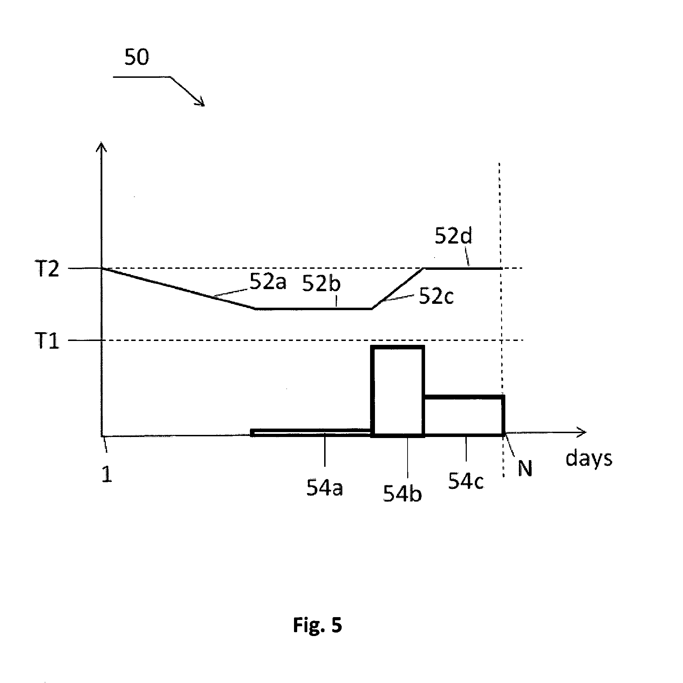

Figure 5 presents in a schematic way an embodiment of an optimal heating plan. In this embodiment the heating plan 50 comprises a plurality of heating/dissipating phases 52a, 52b, 52c, 52d for minimizing the overall costs of cargo heating. It is seen, that in the present scenario, it was found advantageous first to allow the cargo to cool down (segment 52a of the temperature curve), then the temperature of the cargo is maintained by providing moderate heating to the cargo (segment 52b of the temperature curve), followed by substantially heating the cargo towards the target temperature (segment 52c of the temperature curve), which in turn is followed by the final phase wherein the target temperature is maintained.

It will be appreciated that the instances when the heaters are turned on are dependent on the ambient conditions, the duration of the voyage and the current temperature of the cargo. Those skilled in the art would readily appreciate which optimization algorithm (for example a cost function) may be used for determining the optimum instances for heating as well as the degree of heating.

It will be further appreciated that when the method is implemented in a computer program it may be advantageously installed on the vessel. Therefore, the program may initially rely mostly on the thermodynamic model based on the technical drawings of the vessel and may be later updated with mostly on empirical and statistical data of the vessel based on experiences during the previous voyages. Afterwards, the program may be self-learning, i.e. the optimization algorithm may be drafted to converge towards a desirable optimal or nearly optimal heating plan using the empirical and statistical constrains, taking due account on the dynamics of the ambient conditions, which may influence the optimization process as well. For example, when the empirical data provide a relation between the ambient conditions and the heat supply, the optimization algorithm may use this relation for forecasting the temperature of the cargo until the discharge date N based on the weather forecast. As the weather forecast is updated, the optimization process shall be updated as well.

It is further found advantageous to provide a suitable (graphic) user interface, feeding back the most important operational parameters, such as the temperature curve (actual and a forecast portion), the heat energy consumption, such as boiler load, fuel consumption (actual and forecast portion) and the voyage costs (actual and forecast portion).

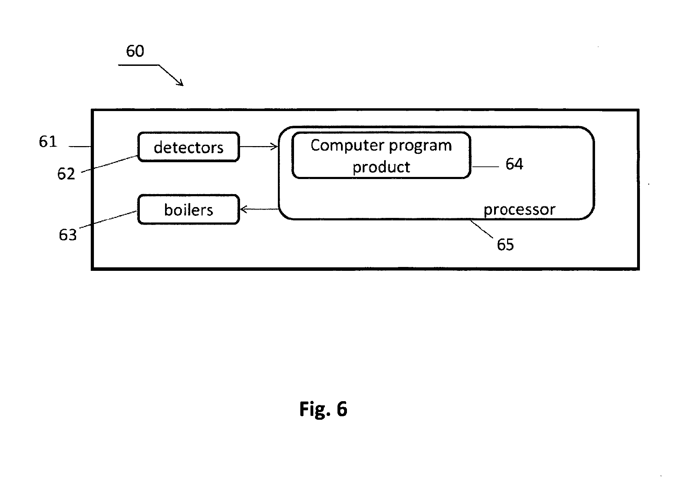

It will be still further appreciated that in some instances it may be necessary to calculate the temperature of the cargo based on the strict heating supply plan. In this case the computer program may be used for calculating the temperature curves based on the intended heat supply. The operator may then decide whether he wishes to alter his heating plan or not. However, it is found to be more convenient to provide the temperature curves of the cargo and the fuel consumption curves based on the data on the actual temperature of the cargo and (dynamic) ambient condition (and the forecast thereof). Preferably, the computer program is arranged to automatically control the heating boilers for switching them on and off at the instances which follow from the optimized heating plan. An embodiment of such control is schematically discussed with reference to Figure 6.

Figure 6 presents in a schematic way an embodiment of a vessel provided with a cargo heating management system according to an aspect of the invention. In the present embodiment the vessel 60, such as a bunker, comprises a system 61 installed thereon, which is arranged to calculate an optimized heating plan and to control the heating devices, such as boilers in response thereto.

Accordingly, the system comprises a processor 65 which is adapted to access or to receive data about the actual temperature of the cargo 62 and the ambient conditions. It will be appreciated that while the temperature of the cargo may be automatically measured using suitable gauges, the data on the ambient conditions may be received wirelessly in an automatic way from a broadcasting station or, alternatively, data on the ambient conditions may be manually provided to the computer using a suitable input device.

When the data is collected that processor calculates the optimum heating plan pursuant to instructions provided by the computer program 64. The computer program 64 is drafted in accordance with the method of the invention as is described with reference to the foregoing. As a result, the processor 65 may provide suitable trigger signals to the heaters, such as boilers 65 for heating the cargo, or for allowing the cargo to cool down within the allowable range of temperatures. Accordingly, a fully automatic system for cargo heating management and control may be provided. It will be appreciated that provided the properties and the location of the heaters is known, it is possible to convert the necessary heating energy required for heating the cargo into the operational parameters of the heaters, such as the duration of opening a respective steam valve.

It will be appreciated that while specific embodiments have been discussed with reference to the figures as are set forth in the foregoing, the figures may not be construed for limiting the scope of the appended claims. In addition, it will be further appreciated that the person skilled in the art would readily implement the described embodiments of the method in software or both the software and the hardware. Other variations of the described embodiments can be understood and effected by those skilled in the art of practicing the claimed subject-matter, from the study of the drawings, the disclosure and the appended claims. The use of the verb "comprise" shall not exclude presence of any further element other than those listed in the claims or discussed in the description. The use of an indefinite article "a" or "an" shall not exclude presence of a plurality of elements of a discussed type.

## Claims

1. A method for determining required heating of a cargo in a vessel for maintaining temperature of the cargo in a prescribed range, comprising the steps of:
- accessing data on ambient conditions;
- accessing data on a current temperature of the cargo and temperature constrains;
- calculating future temperature of the cargo using a thermodynamic model of a vessel based on the accessed data on ambient conditions, the current temperature of the cargo and an initial cargo heating plan.

2. The method according to claim 1, wherein the heating plan comprises data on energy supply to the cargo.

3. The method according to claim 1 or 2, wherein the forecast data is being dynamically updated.

4. The method according to any one of the preceding claims, wherein the thermodynamic model of the vessel is arranged to calculate the optimal heating plan of the cargo for a pre-determined target future temperature of the cargo.

5. The method according to claim 4, wherein the optimal plan is provided based on minimum energy consumption for reaching the pre-determined target future temperature of the cargo.

6. The method according to any one of the preceding claims, wherein the thermodynamic model of the vessel comprises tabulated data and/or empirical data and/or mathematical model.

7. The method according to any one of the preceding claims, wherein the step of calculating the future temperature of the cargo using a thermodynamic model of a vessel is interactive with a user.

8. The method according to any one of the preceding claims, wherein the said thermodynamic model is self-learning.

9. The method according to any one of the preceding claims, wherein the thermodynamic model of the vessel is constructed based on the actual data on the construction of the vessel and is arranged for calculating the heat dissipation from the cargo to surroundings.

10. The method according to any one of the preceding claims, wherein the method further comprises the step of:
- calculating the future temperature of the cargo for a pre-defined input energy.

11. The method according to claim 10, wherein the pre-defined input energy is tabulated or is input by an operator.

12. A computer program product comprising instructions for causing a processor to carry out the steps of the method according to any one of the preceding claims.

13. A carrier comprising a computer program product according to claim 13.

14. A system for enabling cargo heating of the vessel, comprising
- a processor adapted to collect data on the ambient conditions and the current temperature of the cargo,
- a computer program product according to claim 12,
wherein the processor is being further arranged to calculate the future temperature of the cargo in response the computer program being activated,
- a heating system controllable by the processor for implementing the heating plan.

15. A vessel, such as a tanker, comprising a computer program product according to claim 13 and/or the system according to claim 14.
